# EUROPEAN PATENT APPLICATION

(11) **EP 4 640 474 A1**
(43) Date of publication of application: **29.10.2025**
(21) Application number: 23905165.9
(22) Date of filing: 12.06.2023
(51) Int. Cl.: B60L 15/20

(54) **VEHICLE ACCELERATION CONTROL METHOD, VEHICLE, AND COMPUTER STORAGE MEDIUM**

(30) Priority: 23.12.2022 CN 202211664930
(71) Applicant: BYD Company Limited, Shenzhen, Guangdong 518118 (CN)
(72) Inventor: LING, Heping, Shenzhen, Guangdong 518118 (CN); SHI, Mingchuan, Shenzhen, Guangdong 518118 (CN); YIN, Chao, Shenzhen, Guangdong 518118 (CN); YUAN, Yuexu, Shenzhen, Guangdong 518118 (CN); ZHOU, Guixin, Shenzhen, Guangdong 518118 (CN)
(74) Representative: Mathys & Squire
(86) International application number: PCT/CN2023/099630
(87) International publication number: WO 2024/130978

(57) **Abstract**

A vehicle acceleration control method, comprising: in a racetrack mode, acquiring an accelerator pedal opening degree change rate and a vehicle remaining energy value; determining a target torque compensation value according to the accelerator pedal opening degree change rate and the vehicle remaining energy value; and controlling acceleration of a vehicle according to the sum of the target torque compensation value and the maximum output torque value. The vehicle acceleration control method can meet an emergency acceleration requirement of a driver, so that the driver experiences the thrill of high-performance driving. Further provided are a vehicle implementing the vehicle acceleration control method, and a computer storage medium.

## Description

### CROSS-REFERENCE TO RELATED APPLICATIONS

The present disclosure claims priority to Chinese Patent Application No. 202211664930.8, filed on December 23, 2022 and entitled "VEHICLE ACCELERATION CONTROL METHOD, VEHICLE, AND COMPUTER STORAGE MEDIUM". The entire content of the above-referenced application is incorporated herein by reference.

### FIELD

The present disclosure relates to the technical field of vehicles, and more specifically, to a vehicle acceleration control method, a vehicle, and a computer storage medium.

### BACKGROUND

In the related art, a driver performs acceleration by stepping on an accelerator pedal. However, when the driver performs emergency acceleration by rapidly stepping on the accelerator pedal, torque outputted by a driving motor cannot exceed a maximum output torque value of the motor in a conventional mode, failing to achieve a relatively high acceleration for the vehicle within a short time. Therefore, an emergency acceleration demand of the driver cannot be met, and the driver cannot experience the thrill of high-performance driving..

### SUMMARY

The present disclosure is intended to resolve at least one of technical problems in the related art. Therefore, an objective of the present disclosure is to provide a vehicle acceleration control method. Through the method, an output torque of a driving motor can exceed a maximum output torque value within a short time through a torque compensation value in a racetrack mode for a short duration, to meet an emergency acceleration intention of a driver, thereby improving driving experience of the driver.

A second objective of the present disclosure is to provide a vehicle.

A third objective of the present disclosure is to provide a computer storage medium.

To resolve the foregoing problems, an embodiment of a first aspect of the present disclosure provides a vehicle acceleration control method. The vehicle acceleration control method includes the following steps. An accelerator pedal opening degree change rate and a remaining energy value of a vehicle in a racetrack mode are obtained. A target torque compensation value is determined based on the accelerator pedal opening degree change rate and the remaining energy value of the vehicle. The vehicle is controlled to perform acceleration based on a sum of the target torque compensation value and a maximum output torque value.

According to the vehicle acceleration control method in this embodiment of the present disclosure, an emergency degree of the emergency acceleration intention of the driver is determined based on the accelerator pedal opening degree change rate in the racetrack mode, the target torque compensation value is determined in combination with the remaining energy value of the vehicle, and the target torque compensation value is compensated to the maximum output torque value to control the vehicle to perform acceleration, so that the output torque of the driving motor exceeds the maximum output torque value in the conventional mode within a short time for a short duration. In this way, the vehicle has a relatively high acceleration within a short time to control the travelling velocity of the vehicle to quickly increase, so as to meet the emergency acceleration demand of the driver, thereby causing the driver to experience the thrill of high-performance driving.

In some embodiments, before the vehicle is controlled to perform acceleration based on a sum of the target torque compensation value and a maximum output torque value, the method further includes the following steps. A current accelerator pedal value is obtained. It is determined that the current accelerator pedal value meets a preset emergency acceleration condition and the vehicle is not in a steering state. The current accelerator pedal value is greater than a preset opening degree threshold, and a duration of the current accelerator pedal value is greater than a preset duration.

In some embodiments, that it is determined that the vehicle is not in a steering state includes the following steps. A steering wheel rotation angle value of the vehicle is obtained. It is determined that the vehicle is not in a steering state if the steering wheel rotation angle value is less than or equal to a preset rotation angle threshold.

In some embodiments, the preset rotation angle threshold is 5°.

In some embodiments, the current accelerator pedal value is a depth by which the driver steps on an accelerator pedal during control of a travelling velocity of the vehicle at a current moment.

In some embodiments, the remaining energy value is a remaining capacity value of a power battery in the vehicle or a remaining oil value of the vehicle.

In some embodiments, that a target torque compensation value is determined based on the accelerator pedal opening degree change rate and the remaining energy value of the vehicle includes the following steps. A target torque compensation coefficient is determined based on the accelerator pedal opening degree change rate and the remaining energy value of the vehicle. The target torque compensation value is obtained based on the target torque compensation coefficient and the maximum output torque value.

In some embodiments, that a target torque compensation coefficient is determined based on the accelerator pedal opening degree change rate and the remaining energy value of the vehicle includes the following steps. It is determined that the accelerator pedal opening degree change rate is greater than a first preset opening degree change rate. A first torque compensation coefficient is used as the target torque compensation coefficient if the remaining energy value of the vehicle is greater than a first energy threshold. A second torque compensation coefficient is used as the target torque compensation coefficient if the remaining energy value of the vehicle is less than or equal to the first energy threshold and greater than a second energy threshold. A third torque compensation coefficient is used as the target torque compensation coefficient if the remaining energy value of the vehicle is less than or equal to the second energy threshold and greater than a third energy threshold. The first energy threshold > the second energy threshold > the third energy threshold, and the first torque compensation coefficient > the second torque compensation coefficient > the third torque compensation coefficient > 0.

In some embodiments, that a target torque compensation coefficient is determined based on the accelerator pedal opening degree change rate and the remaining energy value of the vehicle further includes the following steps. It is determined that the accelerator pedal opening degree change rate is less than or equal to the first preset opening degree change rate and greater than a second preset opening degree change rate. The second torque compensation coefficient is used as the target torque compensation coefficient if the remaining energy value of the vehicle is greater than the second energy threshold. The third torque compensation coefficient is used as the target torque compensation coefficient if the remaining energy value of the vehicle is less than or equal to the second energy threshold and greater than the third energy threshold.

In some embodiments, that a target torque compensation coefficient is determined based on the accelerator pedal opening degree change rate and the remaining energy value of the vehicle further includes the following steps. It is determined that the accelerator pedal opening degree change rate is less than or equal to the second preset opening degree change rate and greater than a third preset opening degree change rate. The third torque compensation coefficient is used as the target torque compensation coefficient if it is determined that the remaining energy value of the vehicle is greater than the third energy threshold.

In some embodiments, that the target torque compensation value is obtained based on the target torque compensation coefficient and the maximum output torque value includes the following steps. A product value of the target torque compensation coefficient and the maximum output torque value is calculated, and the product value is used as the target torque compensation value.

An embodiment of a second aspect of the present disclosure provides a vehicle, which includes at least one processor; and a memory communicatively connected with the at least one processor. The memory stores a computer program executable by the at least one processor. When the at least one processor executes the computer program, the vehicle acceleration control method in the foregoing embodiments is implemented.

According to the vehicle in this embodiment of the present disclosure, the output torque of the driving motor can exceed the maximum output torque value within a short time through the torque compensation value in the racetrack mode for a short duration, to meet the emergency acceleration intention of the driver, thereby improving the driving experience of the driver.

An embodiment of a third aspect of the present disclosure provides a computer storage medium, which stores a computer program thereon. The computer program, when executed by a processor, implements the vehicle acceleration control method in the foregoing embodiments.

Additional aspects and advantages of the present disclosure are to be partially provided in the following description, and partially become apparent in the following description or learned through the practice of the present disclosure.

### BRIEF DESCRIPTION OF THE DRAWINGS

The above and/or additional aspects and advantages of the present disclosure become apparent and comprehensible from description of embodiments made with reference to the following accompanying drawings.
FIG. 1 is a flowchart of a vehicle acceleration control method according to an embodiment of the present disclosure;
(a)-(c) in FIG. 2 are respectively schematic diagrams of changes in a vehicle velocity, a power of a driving motor, and an output torque over time according to an embodiment of the present disclosure;
FIG. 3 is a flowchart of a vehicle acceleration control method according to another embodiment of the present disclosure; and
FIG. 4 is a structural block diagram of a vehicle according to an embodiment of the present disclosure.

In the drawings:
Vehicle 10;
Processor 1; Memory 2.

### DETAILED DESCRIPTION

Embodiments described with reference to the accompanying drawings are exemplary, and the embodiments of the present disclosure are described in detail below.

To resolve the foregoing problems, an embodiment of a first aspect of the present disclosure provides a vehicle acceleration control method. Through the method, a torque outputted by a driving motor can exceed a maximum output torque value within a short time through a torque compensation value in a racetrack mode for a short duration, to meet an emergency acceleration intention of a driver, thereby improving driving experience of the driver.

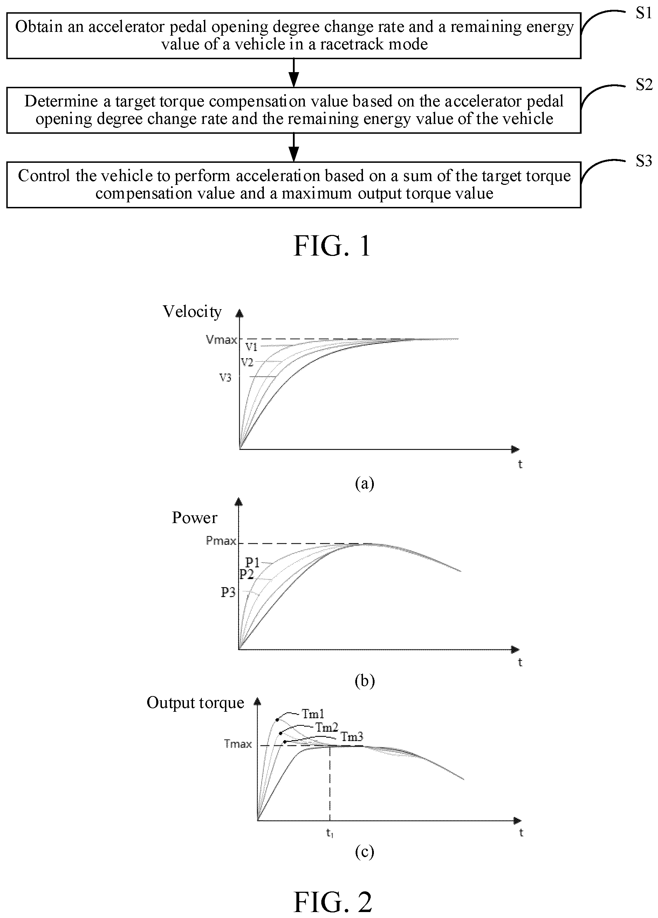

The vehicle acceleration control method according to an embodiment of the present disclosure is described below with reference to FIG. 1. As shown in FIG. 1, the method includes step S1 to step S3.

Step S1: An accelerator pedal opening degree change rate and a remaining energy value of a vehicle in a racetrack mode are obtained.

The accelerator pedal opening degree change rate may be understood as a change situation of an opening degree of an accelerator pedal within a period of time.

Specifically, a racetrack mode activation determining module determines whether a racetrack mode of the vehicle is activated. If the racetrack mode of the vehicle is activated, when the vehicle is in the racetrack mode, a signal collection module collects the accelerator pedal opening degree change rate and the remaining energy value of the vehicle in real time, and performs signal processing on the accelerator pedal opening degree change rate and the remaining energy value of the vehicle that are collected. For example, signal processing is performed on the collected data through a frequently used signal processing method such as Kalman filtering.

In some embodiments, the remaining energy value of the vehicle may be a remaining capacity value of a power battery in the vehicle or a remaining oil value of the vehicle. In other words, after an emergency degree of an emergency acceleration intention of a driver is determined, a torque compensation value outputted by a driving motor needs to be increased or decreased based on the remaining capacity value of the power battery in the vehicle or the remaining oil value of the vehicle, so as to maximize power performance of the driving motor. The remaining capacity value may be understood as a remaining state of charge of the power battery.

Step S2: A target torque compensation value is determined based on the accelerator pedal opening degree change rate and the remaining energy value of the vehicle.

Specifically, in the related art, impact of a remaining state of charge of a battery on meeting an emergency acceleration intention of a driver is not considered. Therefore, in the present disclosure, the target torque compensation value is determined based on the accelerator pedal opening degree change rate and the remaining energy value of the vehicle. In other words, if the vehicle is not in a steering state, it indicates that the vehicle is in a safe travelling state. Therefore, a torque control module determines the target torque compensation value based on the accelerator pedal opening degree change rate and the remaining energy value of the vehicle, to control the driving motor to output a corresponding target torque compensation value in response to the emergency acceleration intention of the driver. In other words, the emergency degree of the emergency acceleration intention of the driver is recognized through determining of a magnitude of the accelerator pedal opening degree change rate. A higher emergency degree of the emergency acceleration intention of the driver indicates a larger torque compensation value that needs to be outputted by the driving motor of the vehicle. However, because the power battery provides power required for the torque compensation value outputted by the driving motor, and a larger torque compensation needs a larger amount of power, the torque compensation value corresponding to the driving motor is adaptively increased or decreased based on the remaining energy value of the vehicle after the emergency degree of the emergency acceleration intention of the driver is determined, to determine the target torque compensation value based on the accelerator pedal opening degree change rate and the remaining energy value of the vehicle, so as to control the driving motor to output the corresponding target torque compensation value, thereby achieving vehicle acceleration that meets the emergency acceleration demand of the driver.

Step S3: The vehicle is controlled to perform acceleration based on a sum of the target torque compensation value and a maximum output torque value.

Specifically, in the racetrack mode, the driver has a more urgent acceleration demand for the vehicle. The driver hopes that a travelling velocity of the vehicle can quickly increase in a shorter time. However, an existing acceleration control policy cannot control the travelling velocity of the vehicle to quickly increase. Based on the above, the present disclosure provides a vehicle acceleration control method. Because the driving motor still has a torque outputting capability at the maximum output torque value in a conventional mode, the sum of the target torque compensation value and the maximum output torque value is calculated and is used as an output torque of the driving motor. In other words, the target torque compensation value is compensated to the maximum output torque value. In this way, the output torque of the driving motor exceeds the maximum output torque value in the conventional mode within a short time, and a duration in which the output torque of the driving motor exceeds the maximum output torque value is short, so that the vehicle has a relatively high acceleration within a short time, to control the travelling velocity of the vehicle to quickly increase, so as to meet the emergency acceleration demand of the driver, thereby causing the driver to experience the thrill of high-performance driving.

In addition, if the racetrack mode of the vehicle is not activated, torque compensation is not required for the output torque of the driving motor.

According to the vehicle acceleration control method in this embodiment of the present disclosure, the emergency degree of the emergency acceleration intention of the driver is determined based on the accelerator pedal opening degree change rate in the racetrack mode, the target torque compensation value is determined in combination to the remaining energy value of the vehicle, and the target torque compensation value is compensated to the maximum output torque value to control the vehicle to perform acceleration, so that the output torque of the driving motor exceeds the maximum output torque value in the conventional mode within a short time for a short duration. In this way, the vehicle has a relatively high acceleration within a short time to control the travelling velocity of the vehicle to quickly increase, so as to meet the emergency acceleration demand of the driver, thereby causing the driver to experience the thrill of high-performance driving.

In some embodiments, before the vehicle is controlled to perform acceleration based on a sum of the target torque compensation value and a maximum output torque value, the vehicle acceleration control method further includes the following steps. A current accelerator pedal value is obtained. It is determined that the current accelerator pedal value meets a preset emergency acceleration condition and the vehicle is not in a steering state. The preset emergency acceleration condition is that the current accelerator pedal value is greater than a preset opening degree threshold, and a duration of the current accelerator pedal value is greater than a preset duration.

The current accelerator pedal value may be understood as a depth by which the driver steps on an accelerator pedal during control of a travelling velocity of the vehicle at a current moment. The steering state may be understood as a state in which a travelling direction of the vehicle changes.

Specifically, when the vehicle is in the racetrack mode, the signal collection module collects the current accelerator pedal value in real time, and performs signal processing on the collected current accelerator pedal value. Because the driver controls the vehicle to perform acceleration by stepping the accelerator pedal, the emergency acceleration intention of the driver is determined through the current accelerator pedal value. If the current accelerator pedal value is greater than the preset opening degree threshold, and the duration of the current accelerator pedal value is greater than the preset duration, the current accelerator pedal value is relatively large, and the current accelerator pedal value is maintained for a continuous period of time, it indicates that the driver expects the vehicle to perform emergency acceleration, so that the vehicle obtains a relatively high velocity. If the current accelerator pedal value is greater than the preset opening degree threshold, and the duration of the current accelerator pedal value is not greater than the preset duration, the driver may incorrectly step on the accelerator pedal, it indicates that the driver has no emergency acceleration intention. Therefore, the vehicle is controlled not to respond to the emergency acceleration intention of the driver.

Based on the above, after recognizing that a driving intention of the driver is the emergency acceleration intention, a vehicle travelling state determining module determines whether the vehicle is in the steering state. The steering state may be left steering and right steering. Whether the vehicle responds to the emergency acceleration intention of the driver is controlled based on a determination result. In a case that the vehicle is in the steering state, the vehicle may have an accident if the vehicle is controlled to perform acceleration, and the emergency acceleration intention of the driver is not responded to. In a case that the vehicle is not in the steering state, it indicates that the vehicle is in a safe travelling state, and the emergency acceleration intention of the driver is responded to, so as to ensure that the vehicle performs emergency acceleration in the safe travelling state, thereby protecting personal safety of the driver.

Whether the vehicle is in the steering state may be determined through related steering data of the vehicle, for example, may be determined based on data such as a steering wheel rotation angle value or a turn indicator state, which is not limited.

In some embodiments, it is determined whether the vehicle is in the steering state includes the following steps. A steering wheel rotation angle value is obtained. It is determined that the vehicle is in the steering state if the steering wheel rotation angle value is greater than the preset rotation angle threshold. It is determined that the vehicle is not in the steering state if the steering wheel rotation angle value is less than or equal to the preset rotation angle threshold.

The preset rotation angle threshold may be understood as a steering wheel rotation angle threshold for changing the travelling direction of the vehicle, which is calibrated based on an experiment. For example, the preset rotation angle threshold may be 5°.

Specifically, in a traveling process of the vehicle, the travelling direction of the vehicle is controlled by controlling rotation of a steering wheel. When the steering wheel rotation angle value is excessively large, the travelling direction of the vehicle is changed. Therefore, it may be determined whether the vehicle is in the steering state through the steering wheel rotation angle value. The signal collection module collects the steering wheel rotation angle value of the vehicle in real time during travelling. If the steering wheel rotation angle value is greater than the preset rotation angle threshold, it indicates that the vehicle deviates from an original travelling direction due to an increase of the steering wheel rotation angle value, and it is determined that the vehicle is in the steering state. In this case, the emergency acceleration intention of the driver is not responded to. If the steering wheel rotation angle value is less than or equal to the preset rotation angle threshold, it indicates that the steering wheel rotation angle value is within the original travelling direction range of the vehicle, and it is determined that the vehicle is not in the steering state. In this case, the vehicle is in the safe travelling state, and the emergency acceleration intention of the driver is responded to.

In some embodiments, that a target torque compensation value is determined based on the accelerator pedal opening degree change rate and the remaining energy value of the vehicle includes the following steps. A target torque compensation coefficient is determined based on the accelerator pedal opening degree change rate and the remaining energy value of the vehicle. The target torque compensation value is obtained based on the target torque compensation coefficient and the maximum output torque value.

The target torque compensation coefficient is a coefficient calibrated through a large number of tests.

Specifically, a higher emergency degree of the emergency acceleration intention of the driver indicates a larger torque compensation value that needs to be outputted by the driving motor of the vehicle. However, the power battery provides an amount of power required for compensation of the output torque of the driving motor, and a vehicle oil tank provides an amount of oil required for compensation of the output torque of the driving motor. Therefore, after the emergency degree of the emergency acceleration intention of the driver is determined, the torque compensation value outputted by the driving motor needs to be increased or decreased based on a remaining amount of power of the power battery or a remaining oil value of the vehicle oil tank, so as to maximize power performance of the driving motor. Therefore, in the present disclosure, the target torque compensation coefficient is determined through the accelerator pedal opening degree change rate and the remaining energy value of the vehicle, to increase or decrease, through the target torque compensation coefficient, the torque compensation value outputted by the driving motor. In other words, a corresponding table of the torque compensation coefficient corresponding to the accelerator pedal opening degree change rate and the remaining energy value of the vehicle is pre-stored in the vehicle. In other words, for different accelerator pedal opening degree change rate and remaining energy value of the vehicle, there are different corresponding torque compensation coefficients. A higher accelerator pedal opening degree change rate and a higher remaining energy value of the vehicle indicate a higher corresponding torque compensation coefficient. In addition, for a same accelerator pedal opening degree change rate, a higher remaining energy value of the vehicle indicates a higher corresponding torque compensation coefficient. Therefore, an optimal target torque compensation coefficient is obtained through the accelerator pedal opening degree change rate and the remaining energy value of the vehicle. The torque compensation value outputted by the driving motor is adjusted through the target torque compensation coefficient. It may be understood that a larger target torque compensation coefficient indicates a larger target torque compensation value. Then, a sum of the adjusted target torque compensation value and the maximum output torque value is used as a peak value of the output torque of the driving motor, so that the vehicle has a larger acceleration to control the vehicle to perform acceleration. Therefore, the driver can experience the thrill of high-performance driving, to meet an emergency acceleration demand of the driver. A remaining amount of power of the power battery may be obtained by a built-in sensor of a battery package, and a remaining oil value in the vehicle fuel tank may be obtained by a fuel level sensor attached to the fuel tank.

In some embodiments, that a target torque compensation coefficient is determined based on the accelerator pedal opening degree change rate and the remaining energy value of the vehicle includes the following steps. It is determined that the accelerator pedal opening degree change rate is greater than a first preset opening degree change rate. A first torque compensation coefficient is used as the target torque compensation coefficient if the remaining energy value of the vehicle is greater than a first energy threshold. A second torque compensation coefficient is used as the target torque compensation coefficient if the remaining energy value of the vehicle is less than or equal to the first energy threshold and greater than a second energy threshold. A third torque compensation coefficient is used as the target torque compensation coefficient if the remaining energy value of the vehicle is less than or equal to the second energy threshold and greater than a third energy threshold. The first energy threshold > the second energy threshold > the third energy threshold, and the first torque compensation coefficient > the second torque compensation coefficient > the third torque compensation coefficient > 0.

The preset opening degree change rate may be understood as the change rate of the opening degree of the accelerator pedal that is set based on the emergency acceleration intention of the driver. A larger preset opening degree change rate indicates a higher emergency acceleration intention of the driver. The first energy threshold may be understood as a threshold of sufficient power of the power battery. The second energy threshold may be understood as a threshold at which the power battery is relatively sufficient. The third energy threshold may be understood as a threshold of insufficient power of the power battery. The torque compensation coefficient may be understood as a coefficient that is calibrated based on the emergency acceleration intention of the driver and the remaining state of charge of the power battery. The torque compensation coefficient is less than 0.2.

In an embodiment, a torque compensation value corresponding to a first torque compensation coefficient *K*₁ is a first torque compensation value ΔT₁. In this case, a peak value of an output torque of the driving motor is *T*_{*m*1}*.* An output power of the driving motor is P₁. A velocity of the vehicle is V1. A torque compensation value corresponding to a second torque compensation coefficient *K*₂ is a second torque compensation value ΔT₂. In this case, a peak value of an output torque of the driving motor is *T*_{*m*2}*.* An output power of the driving motor is P₂. A velocity of the vehicle is V2. A torque compensation value corresponding to a third torque compensation coefficient *K*₃ is a third torque compensation value ΔT₃. In this case, a peak value of an output torque of the driving motor is *T*_{*m*3}. An output power of the driving motor is P₃. A velocity of the vehicle is V3. As shown in FIG. 2, a larger torque compensation coefficient indicates a higher torque compensation value. In this case, before a time t1, an output torque of the driving motor has a larger peak value, that is, Tₘ₁ > Tₘ₂ > Tₘ₃ > Tₘₐₓ. Before the output power of the driving motor reaches a maximum output power Tₘₐₓ, a larger torque compensation coefficient indicates a larger output power, that is, P1 > P2 > P3 > Pmax. Before the velocity of the vehicle reaches a maximum velocity Vₘₐₓ, a larger torque compensation coefficient indicates a higher velocity of a vehicle, that is, V1 > V2 > V3 > Vₘₐₓ. Therefore, in the present disclosure, the torque compensation value is increased or decreased by selecting the torque compensation coefficient, to meet emergency acceleration demands under different emergency degrees of the emergency acceleration intention of the driver and the remaining energy value of the vehicle.

Specifically, the emergency degree of the emergency acceleration intention of the driver is recognized through determining of a magnitude of an accelerator pedal opening degree change rate *θ̇*₀. A larger magnitude of the accelerator pedal opening degree change rate *θ̇*₀ indicates a higher emergency degree of the emergency acceleration intention of the driver. Therefore, the emergency degree of the emergency acceleration intention of the driver is classified based on the accelerator pedal opening degree change rate *θ̇*₀ and the preset opening degree change rate. If it is determined that the accelerator pedal opening degree change rate *θ̇*₀ is greater than a first preset opening degree change rate *θ̇*₁, which, for example, may be expressed as *θ̇*₀ *> θ̇*₁, it indicates that the accelerator pedal opening degree change rate *θ̇*₀ is relatively large. In other words, the accelerator pedal is quickly stepped. Therefore, it is determined that the driver has a strong acceleration intention. A higher emergency degree of the emergency acceleration intention indicates a higher velocity that the driver expects the vehicle to reach. The driving motor outputs a larger torque compensation value. However, because the power battery provides power required for the torque compensation value outputted by the driving motor, and a larger torque compensation needs a larger amount of power, power of the power battery needs to be considered. In a case that emergency degrees of acceleration intentions of the driver are the same, the torque compensation value outputted by the driving motor is adaptively increased or decreased based on the remaining energy value of the vehicle, so as to maximize power performance of the driving motor, thereby causing the driver to experience the thrill of high-performance driving.

Based on the above, when the remaining energy value of the vehicle is relatively large, the power battery has sufficient power and the emergency acceleration intention of the driver can be met. When the remaining energy value of the vehicle is relatively small, the power battery is insufficient, and the torque compensation value outputted by the driving motor should be adaptively reduced, to save the power of the power battery. Therefore, in the present disclosure, the target torque compensation coefficient is selected through a remaining energy value *SOC*₀ of a vehicle to increase or decrease the target torque compensation value. If the remaining energy value *SOC*₀ of the vehicle is greater than a first energy threshold *SOC*₁, which, for example, may be expressed as *SOC*₀ > *SOC*₁, it indicates that the power of the power battery is sufficient. In this case, the torque compensation value outputted by the driving motor is not required to reduce. The first torque compensation coefficient K₁ is used as the target torque compensation coefficient, to obtain the first torque compensation value ΔT₁ corresponding to the obtained first torque compensation coefficient K₁ as the target torque compensation value, to control the driving motor to output the first torque compensation value ΔT₁ to meet an excessively high emergency acceleration intention of the driver. Moreover, because the first torque compensation value ΔT₁ is relatively large, the vehicle velocity V1 is high. If the remaining energy value *SOC*₀ of the vehicle is less than or equal to a first energy threshold *SOC*₁ and is greater than the second energy threshold *SOC*₂, which, for example, may be expressed as *SOC*₂ < *SOC*₀ ≤ *SOC*₁, it indicates that power of the power battery is relatively sufficient. In this case, the torque compensation value outputted by the driving motor should be relatively decreased, to save the power of the power battery. The second torque compensation coefficient K₂ is used is used as the target torque compensation coefficient, to obtain the second torque compensation value ΔT₂ corresponding to the obtained second torque compensation coefficient K₂ the target torque compensation value, to control the driving motor to output the second torque compensation value ΔT₂ to meet an excessively high emergency acceleration intention of the driver. The second torque compensation value ΔT₂ is less than the first torque compensation value ΔT₁. Therefore, the velocity V2 of the vehicle is lower than the velocity V1. If the remaining energy value *SOC*₀ of the vehicle is less than or equal to the second energy threshold *SOC*₂ and is greater than a third energy threshold *SOC*₃, which, for example, may be expressed as *SOC*₃ < *SOC*₀ ≤ *SOC*₂, it indicates that the power battery has a relatively low power. In this case, the torque compensation value of the driving motor should be greatly reduced. The third torque compensation coefficient K₃ is used as the target torque compensation coefficient, to obtain the third torque compensation value ΔT₃ corresponding to the obtained third torque compensation coefficient K₃ as the target torque compensation value, to control the driving motor to output the third torque compensation value ΔT₃ to meet an excessively high emergency acceleration intention of the driver. The third torque compensation value ΔT₃ is less than the second torque compensation value ΔT₂. Therefore, the velocity V3 of the vehicle is lower than the velocity V2.

It should be noted that in a case that emergency degrees of acceleration intentions of the driver are the same, a higher remaining energy value *SOC*₀ of the vehicle indicates a larger target torque compensation coefficient, a larger target torque compensation value, a larger output torque of the driving motor, a larger output power of the driving motor, and a larger velocity of the vehicle. An excessively urgent emergency acceleration demand of the driver is met through the remaining energy value of the vehicle *SOC*₀ to different extents.

In some embodiments, that a target torque compensation coefficient is determined based on the accelerator pedal opening degree change rate and the remaining energy value of the vehicle further includes the following steps. It is determined that the accelerator pedal opening degree change rate is less than or equal to the first preset opening degree change rate and greater than a second preset opening degree change rate. The second torque compensation coefficient is used as the target torque compensation coefficient if the remaining energy value of the vehicle is greater than the second energy threshold. A third torque compensation coefficient is used as the target torque compensation coefficient if the remaining energy value of the vehicle is less than or equal to the second energy threshold and greater than a third energy threshold.

Specifically, the emergency degree of the emergency acceleration intention of the driver is classified based on the accelerator pedal opening degree change rate *θ̇*₀ and the preset opening degree change rate. If it is determined that the accelerator pedal opening degree change rate *θ̇*₀ is less than or equal to the first preset opening degree change rate *θ̇*₁ and is greater than the second preset opening degree change rate *θ̇*₂, which, for example, may be expressed as *θ̇*₂ < *θ̇*₀ ≤ *θ̇*₁, it dictates that the accelerator pedal opening degree change rate is relatively large. In other words, the accelerator pedal is quickly stepped. Therefore, it is determined that the driver has a relatively strong emergency acceleration intention. In this case, the torque compensation value outputted by the driving motor only needs a moderate amount of power. Therefore, the emergency acceleration intention of the driver can be met through determining whether the remaining energy value *SOC*₀ of the vehicle is greater than the second energy threshold *SOC*₂. If the remaining energy value *SOC*₀ of the vehicle is greater than a second energy threshold *SOC*₂, which, for example, may be expressed as *SOC*₀ > *SOC*₂. The second torque compensation coefficient K₂ is used is used as the target torque compensation coefficient to obtain the second torque compensation value ΔT₂ corresponding to the obtained second torque compensation coefficient K₂ as the target torque compensation value, to control the driving motor output the second torque compensation value ΔT₂ to meet an excessively high emergency acceleration intention of the driver. If the remaining energy value *SOC*₀ of the vehicle is less than or equal to the second energy threshold *SOC*₂ and is greater than the third energy threshold *SOC*₃, which, for example, may be expressed as *SOC*₃ < *SOC*₀ ≤ *SOC*₂, it indicates that the power battery has a relatively low power. The third torque compensation coefficient K₃ is used as the target torque compensation coefficient, to obtain the third torque compensation value ΔT₃ corresponding to the obtained third torque compensation coefficient K₃ as the target torque compensation value, to control the driving motor output the third torque compensation value ΔT₃ to meet an excessively high emergency acceleration demand of the driver.

In some embodiments, that a target torque compensation coefficient is determined based on the accelerator pedal opening degree change rate and the remaining energy value of the vehicle further includes the following steps. It is determined that the accelerator pedal opening degree change rate is less than or equal to the second preset opening degree change rate and greater than a third preset opening degree change rate. The third torque compensation coefficient is used as the target torque compensation coefficient if it is determined that the remaining energy value of the vehicle is greater than the third energy threshold.

Specifically, the emergency degree of the emergency acceleration intention of the driver is classified based on the accelerator pedal opening degree change rate *θ̇*₀ and the preset opening degree change rate. If it is determined that the accelerator pedal opening degree change rate *θ̇*₀ is less than or equal to the second preset opening degree change rate *θ̇*₂ and is greater than the third preset opening degree change rate *θ̇*₃, which, for example, may be expressed as *θ̇*₃ < *θ̇*₀ ≤ *θ̇*₂, it indicates that the accelerator pedal opening degree change rate *θ̇*₀ is relatively small. In other words, the accelerator pedal is slowly stepped. Therefore, it is determined that the driver has a relatively weak acceleration intention. In this case, the torque compensation value outputted by the driving motor only needs a relatively small amount of power. Therefore, the relatively weak emergency acceleration intention of the driver can be met merely through determining whether the remaining energy value *SOC*₀ of the vehicle is greater than the third energy threshold *SOC*₃. If it is determined that the remaining energy value *SOC*₀ of the vehicle is greater than the third energy threshold *SOC*₃, which, for example, may be expressed as *SOC*₀ *> SOC*₃, the third torque compensation coefficient K₃ is used as the target torque compensation coefficient, to obtain the third torque compensation value ΔT₃ corresponding to the third torque compensation coefficient K₃ as the target torque compensation value. If it is determined that the remaining energy value *SOC*₀ of the vehicle is less than or equal to the third energy threshold, which, for example, may be expressed as *SOC*₀ ≤ *SOC*₃, it indicates that the power battery cannot meet the relatively weak emergency acceleration intention of the driver. Therefore, the vehicle is controlled to disable an emergency acceleration mode.

In some embodiments, that the target torque compensation value is obtained based on the target torque compensation coefficient and the maximum output torque value includes the following steps. A product value of the target torque compensation coefficient and the maximum output torque value is calculated, and the product value is used as the target torque compensation value.

Target torque compensation value ΔT= Target torque compensation coefficient K * Maximum output torque value Tₘₐₓ. If the target torque compensation coefficient is the first torque compensation coefficient K₁, a product value of the first torque compensation coefficient K₁ and the maximum output torque value Tₘₐₓ is the first torque compensation value ΔT₁, which, for example, is expressed as ΔT₁ = K₁Tₘₐₓ. The first torque compensation value ΔT₁ is used as the target torque compensation value. Therefore, the peak value of the output torque of the driving motor is Tₘ₁ = Tₘₐₓ + K₁Tₘₐₓ. If the target torque compensation coefficient is the second torque compensation coefficient K₂, a product value of the second torque compensation coefficient K₂ and the maximum output torque value Tₘₐₓ is the second torque compensation value ΔT₂, which, for example, may be expressed as ΔT₂ = K₂Tₘₐₓ. The second torque compensation value ΔT₂ is used as the target torque compensation value ΔT. Therefore, the peak value of the output torque of the driving motor is Tₘ₂ = Tₘₐₓ + K₂Tₘₐₓ. If the target torque compensation coefficient is the third torque compensation coefficient K₃, a product value of the third torque compensation coefficient K₃ and the maximum output torque value Tₘₐₓ is the third torque compensation value ΔT₃, which, for example, may be expressed as ΔT₃ = K₃Tₘₐₓ. The third torque compensation value ΔT₃ is used as the target torque compensation value ΔT. Therefore, the peak value of the output torque of the driving motor is Tₘ₃ = Tₘₐₓ + K₃Tₘₐₓ. As shown in FIG. 2, before a time point t₁, Tₘ₁ > Tₘ₂ > Tₘ₃ > Tₘₐₓ. In other words, a higher target torque compensation coefficient indicates a larger corresponding target torque compensation value and a larger corresponding peak value of the output torque of the driving motor. It may be learned from a slope of a curve of the output torque and the time in FIG. 2 that the output torque of the driving motor can be increased more quickly, and can exceed the maximum output torque value Tₘₐₓ of the driving motor to some extent. In this way, the vehicle can respond to the emergency acceleration intention of the driver more quickly, and can achieve a larger acceleration in a period of time. When the output torque of the driving motor reaches Tₘ₁, Tₘ₂, and Tₘ₃, an instruction is outputted to control the output torque of the driving motor to be the maximum output torque value Tₘₐₓ. After the time point t1, the output torque of the driving motor is the maximum output torque value Tₘₐₓ or less than the maximum output torque value Tₘₐₓ.

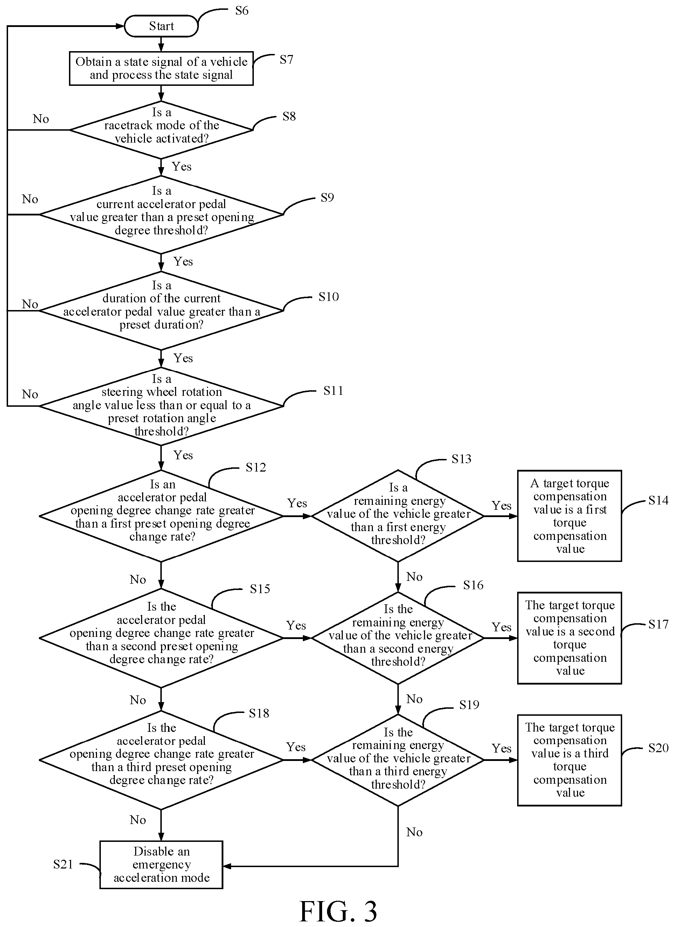

The vehicle acceleration control method according to an embodiment of the present disclosure is illustrated below with reference to FIG. 3.

Step S6: A process is started.

Step S7: A state signal of a vehicle is obtained, such as a current accelerator pedal value, an accelerator pedal opening degree change rate *θ̇*₀, a remaining energy value *SOC*₀ of a vehicle, and a racetrack mode signal, and the state signal is processed through a frequently-used signal processing manner such as Kalman filtering.

Step S8: It is determined whether a racetrack mode of the vehicle is activated. If yes, step S9 is performed; or otherwise, step S6 is performed.

Step S9: It is determined whether a current accelerator pedal value *θ̇*₀ is greater than a preset opening degree threshold *θ̇*₁. In other words, it is determined whether *θ*₀ > *θ*₁ is met. If yes, step S10 is performed; or otherwise, step S6 is performed.

Step S10: It is determined whether a duration t of the current accelerator pedal value is greater than a preset duration t1. If yes, step S11 is performed; or otherwise, step S6 is performed.

Step S11: It is determined whether a steering wheel rotation angle value is less than or equal to a preset rotation angle threshold. If yes, step S12 is performed; or otherwise, step S6 is performed.

Step S12: It is determined whether an accelerator pedal opening degree change rate *θ̇*₀ is greater than a first preset opening degree change rate *θ̇*₁. In other words, it is determined whether *θ̇*₀ > *θ̇*₁ is met. If yes, step S13 is performed; or otherwise, step S15 is performed.

Step S13: It is determined whether the remaining energy value *SOC*₀ of the vehicle is greater than a first energy threshold *SOC*₁*.* In other words, it is determined whether *SOC*₀ > *SOC*₁ is met. If yes, step S14 is performed; or otherwise, step S16 is performed.

Step S14: A target torque compensation value ΔT is a first torque compensation value ΔT₁.

Step S15: It is determined whether the accelerator pedal opening degree change rate *θ̇*₀ is greater than a second preset opening degree change rate *θ̇*₂. In other words, it is determined whether *θ̇*₀ > *θ̇*₂ is met. If yes, step S16 is performed; or otherwise, step S18 is performed.

Step S16: It is determined whether the remaining energy value *SOC*₀ of the vehicle is greater than a second energy threshold *SOC*₂. In other words, it is determined whether *SOC*₀ > *SOC*₂ is met. If yes, step S17 is performed; or otherwise, step S19 is performed.

Step S17: The target torque compensation value ΔT is a second torque compensation value ΔT₂.

Step S18: It is determined whether the accelerator pedal opening degree change rate *θ̇*₀ is greater than a third preset opening degree change rate *θ̇*₃. In other words, it is determined whether *θ̇*₀ > *θ̇*₃ is met. If yes, step S19 is performed; or otherwise, step S21 is performed.

Step S19: It is determined whether the remaining energy value *SOC*₀ of the vehicle is greater than a third energy threshold *SOC*₃. In other words, it is determined whether *SOC*₀ > *SOC*₃ is met. If yes, step S20 is performed; or otherwise, step S21 is performed.

Step S20: The target torque compensation value ΔT is a third torque compensation value ΔT₃.

Step S21: An emergency acceleration mode is disabled.

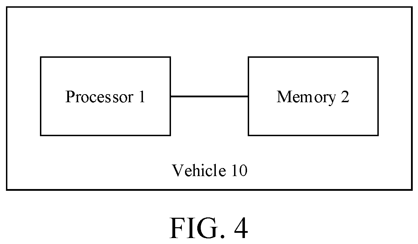

An embodiment of a second aspect of the present disclosure provides a vehicle 10. As shown in FIG. 4, the vehicle 10 includes at least one processor 1 and a memory 2 communicatively connected with the at least one processor 1.

The memory 2 stores a computer program that can be executed by the at least one processor 1. When the at least one processor 1 executes the computer program, the vehicle acceleration control method in the foregoing embodiments is implemented.

It should be noted that a specific implementation of the vehicle 10 of the embodiment of the present disclosure is similar to a specific implementation of the vehicle acceleration control method of the foregoing embodiments of the present disclosure. For details, reference is made to the description about the method. To reduce redundancy, details are not described herein again.

According to the vehicle 10 in this embodiment of the present disclosure, the output torque of the driving motor can exceed the maximum output torque value within a short time through the torque compensation value in the racetrack mode for a short duration, to meet the emergency acceleration intention of the driver, thereby improving the driving experience of the driver.

An embodiment of a third aspect of the present disclosure provides a computer storage medium, which stores a computer program thereon. The computer program, when executed by a processor, implements the vehicle acceleration control method in the foregoing embodiments.

In the description of this specification, a description of any process or method in the flowcharts or described herein in another manner can be construed as representing one or more modules, fragments, or parts that include code of executable instructions used to implement a specific logical function or steps of a process. In addition, the scope of the exemplary implementations of the present disclosure includes another implementation. Functions can be performed not in an order shown or discussed, including performing the functions substantially at the same time or in reverse order according to the functions involved, which should be understood by a person skilled in the technical field to which the embodiments of the present disclosure belong.

The logic and/or steps shown in the flowcharts or described in any other manner herein, for example, a sequenced list that may be considered as executable instructions used for implementing logical functions, may be specifically implemented in any computer-readable medium to be used by an instruction execution system, apparatus, or device (for example, a computer-based system, a system including a processor, or another system that can obtain an instruction from the instruction execution system, apparatus, or device and execute the instruction) or to be used by combining such instruction execution systems, apparatuses, or devices. In the context of the present disclosure, a "computer-readable medium" may be any apparatus that can include, store, communicate, propagate, or transmit the program for use by the instruction execution system, apparatus, or device or in combination with the instruction execution system, apparatus, or device. More specific examples (a non-exhaustive list) of the computer-readable storage medium include: an electrical connection portion (electronic apparatus) with one or more wires, a portable computer case (magnetic apparatus), a random access memory (RAM), a read-only memory (ROM), an erasable and editable read-only memory (EPROM or flash memory), an optical fiber apparatus, and a portable compact disk read only memory (CDROM). In addition, the computer-readable medium can even be paper or other suitable media on which the program can be printed, because the program can be obtained electronically by, for example, optically scanning paper or other media, then editing, interpreting, or processing in other suitable ways if necessary, and then storing it in a computer memory.

It should be understood that parts of the present disclosure can be implemented by using hardware, software, firmware, or a combination thereof. In the foregoing implementations, multiple steps or methods may be implemented by using software or firmware that are stored in a memory and are executed by a proper instruction execution system. For example, if hardware is used for implementation, same as in another implementation, implementation may be performed by any one of the following technologies well known in the art or a combination thereof: a discrete logic circuit including a logic gate circuit for implementing a logic function of a data signal, a dedicated integrated circuit including a proper combined logic gate circuit, a programmable gate array (PGA), a field programmable gate array (FPGA), and the like.

A person of ordinary skill in the art may understand that all or some of the steps of the methods in the foregoing embodiments may be implemented by a program instructing relevant hardware. The program may be stored in a computer-readable storage medium. When the program is executed, one or a combination of the steps of the method embodiments are performed.

In addition, each functional unit in each embodiment of the present disclosure may be integrated into one processing module, or each unit may exist alone physically, or two or more units may be integrated into one module. The integrated module may be implemented in the form of hardware, or may be implemented in a form of a software functional module. If implemented in the form of software functional modules and sold or used as an independent product, the integrated module may also be stored in a computer-readable storage medium.

The storage medium mentioned above may be a read-only memory, a magnetic disk, an optical disc, or the like. Although the embodiments of the present disclosure have been shown and described above, it may be understood that, the above embodiments are exemplary and should not be understood as a limitation on the present disclosure. A person of ordinary skill in the art may make changes, modifications, replacements, or variations to the above embodiments within the scope of the present disclosure.

In the descriptions of this specification, descriptions using reference terms "an embodiment", "some embodiments", "an exemplary embodiment", "an example", "a specific example", or "some examples" mean that specific characteristics, structures, materials, or features described with reference to the embodiment or example are included in at least one embodiment or example of the present disclosure. In this specification, exemplary descriptions of the foregoing terms do not necessarily refer to the same embodiment or example.

Although the embodiments of the present disclosure are shown and described, a person of ordinary skill in the art may understand that various changes, modifications, replacements, and variations may be made to the embodiments without departing from the principles and spirit of the present disclosure, and the scope of the present disclosure is as defined by the appended claims and their equivalents.

## Claims

1. A vehicle acceleration control method, comprising:
obtaining an accelerator pedal opening degree change rate and a remaining energy value of a vehicle in a racetrack mode;
determining a target torque compensation value based on the accelerator pedal opening degree change rate and the remaining energy value of the vehicle; and
controlling the vehicle to perform acceleration based on a sum of the target torque compensation value and a maximum output torque value.

2. The vehicle acceleration control method according to claim 1, wherein before controlling the vehicle to perform acceleration based on the sum of the target torque compensation value and the maximum output torque value, the method further comprises:
obtaining a current accelerator pedal value; and
determining that the current accelerator pedal value meets a preset emergency acceleration condition and the vehicle is not in a steering state,
wherein the preset emergency acceleration condition is that the current accelerator pedal value is greater than a preset opening degree threshold, and a duration of the current accelerator pedal value is greater than a preset duration.

3. The vehicle acceleration control method according to claim 2, wherein determining that the vehicle is not in the steering state comprises:
obtaining a steering wheel rotation angle value of the vehicle; and
determining that the vehicle is not in the steering state if the steering wheel rotation angle value is less than or equal to a preset rotation angle threshold.

4. The vehicle acceleration control method according to claim 3, wherein the preset rotation angle threshold is 5°.

5. The vehicle acceleration control method according to any of claims 2 to 4, wherein the current accelerator pedal value is a depth by which the driver steps on an accelerator pedal during control of a travelling velocity of the vehicle at a current moment.

6. The vehicle acceleration control method according to any of claims 1 to 5, wherein the remaining energy value is a remaining capacity value of a power battery in the vehicle or a remaining oil value of the vehicle.

7. The vehicle acceleration control method according to any of claims 1 to 6, wherein determining the target torque compensation value based on the accelerator pedal opening degree change rate and the remaining energy value of the vehicle comprises:
determining a target torque compensation coefficient based on the accelerator pedal opening degree change rate and the remaining energy value of the vehicle; and
obtaining the target torque compensation value based on the target torque compensation coefficient and the maximum output torque value.

8. The vehicle acceleration control method according to claim 7, wherein determining the target torque compensation coefficient based on the accelerator pedal opening degree change rate and the remaining energy value of the vehicle comprises:
determining that the accelerator pedal opening degree change rate is greater than a first preset opening degree change rate;
using a first torque compensation coefficient as the target torque compensation coefficient if the remaining energy value of the vehicle is greater than a first energy threshold;
using a second torque compensation coefficient as the target torque compensation coefficient if the remaining energy value of the vehicle is less than or equal to the first energy threshold and greater than a second energy threshold; and
using a third torque compensation coefficient as the target torque compensation coefficient if the remaining energy value of the vehicle is less than or equal to the second energy threshold and greater than a third energy threshold,
wherein the first energy threshold > the second energy threshold > the third energy threshold; and the first torque compensation coefficient > the second torque compensation coefficient > the third torque compensation coefficient > 0.

9. The vehicle acceleration control method according to claim 8, wherein determining the target torque compensation coefficient based on the accelerator pedal opening degree change rate and the remaining energy value of the vehicle further comprises:
determining that the accelerator pedal opening degree change rate is less than or equal to the first preset opening degree change rate and greater than a second preset opening degree change rate;
using the second torque compensation coefficient as the target torque compensation coefficient if the remaining energy value of the vehicle is greater than the second energy threshold; and
using the third torque compensation coefficient as the target torque compensation coefficient if the remaining energy value of the vehicle is less than or equal to the second energy threshold and greater than the third energy threshold.

10. The vehicle acceleration control method according to claim 9, wherein determining the target torque compensation coefficient based on the accelerator pedal opening degree change rate and the remaining energy value of the vehicle further comprises:
determining that the accelerator pedal opening degree change rate is less than or equal to the second preset opening degree change rate and greater than a third preset opening degree change rate; and
using the third torque compensation coefficient as the target torque compensation coefficient if it is determined that the remaining energy value of the vehicle is greater than the third energy threshold.

11. The vehicle acceleration control method according to any of claims 8 to 10, wherein obtaining the target torque compensation value based on the target torque compensation coefficient and the maximum output torque value comprises:
calculating a product value of the target torque compensation coefficient and the maximum output torque value, and using the product value as the target torque compensation value.

12. A vehicle (10), comprising:
at least one processor (1); and
a memory (2), communicatively connected with the at least one processor (1),
wherein the memory (2) stores a computer program executable by the at least one processor (1); and when the at least one processor (1) executes the computer program, the vehicle acceleration control method according to any of claims 1 to 11 is implemented.

13. A computer storage medium, storing a computer program thereon, the computer program, when executed by a processor, implementing the vehicle acceleration control method according to any of claims 1 to 11.
